# EUROPÄISCHE PATENTANMELDUNG

(11) **EP 0 687 913 A2**
(43) Veröffentlichungstag der Anmeldung: **20.12.1995**
(21) Anmeldenummer: 95105527.6
(22) Anmeldetag: 12.04.1995
(51) Int. Cl.: G01P 3/486, G06K 9/18

(54) **Messgerät mit einer integrierten Licht-Abtasteinrichtung**

(30) Priorität: 13.06.1994 DE 4420562
(71) Anmelder: PRÜFTECHNIK DIETER BUSCH AG, D-85737 Ismaning (DE)
(72) Erfinder: Busch, Dieter, D-85737 Ismaning (DE)
(74) Vertreter: Ritter und Edler von Fischern, Bernhard, Dipl.-Ing.

(57) **Zusammenfassung**

Meßgerät mit einer integrierten Licht-Abtasteinrichtung zum Erfassen der Drehzahl eines rotierenden Körpers, wobei mittels der Lichtstrahlabtasteinrichtung kontrastkodierte Daten (Strichcodes) erfaßt werden können. Das Meßgerät umfaßt eine Wähleinrichtung, um die Betriebsart Drehzahlmessung oder Datenerfassung auszuwählen. Eine Analyseeinrichtung analysiert von der Abtasteinrichtung (1) ausgegebene Signale und wählt abhängig vom Ergebnis der Analyse selbsttätig eine der Betriebsarten Drehzahlmessung und Datenerfassung.

## Beschreibung

Die vorliegende Erfindung betrifft ein Meßgerät mit einer integrierten Licht-Abtasteinrichtung zum Erfassen der Drehzahl eines rotierenden Körpers.

Aus US-PS 5 059 901 ist es bekannt, einen Laserstrahl dazu zu verwenden, Reflexmarken auf rotierenden Wellen abzutasten, um auf diese Weise die Drehzahl einer rotierenden Welle zu erfassen.

Bei der Instandhaltung von Maschinenkomplexen ist es erforderlich, Zustandsdaten von einer Vielzahl verschiedener Meßstellen zu erfassen. Diese Zustandsdaten umfassen eine Vielzahl physikalischer Parameter, wie etwa Temperatur, Drehzahl, Schwingstärke, Walzlagerzustände, Kavitation, etc. Dabei ist es von Bedeutung, daß die erfaßten Meßdaten für eine spätere Auswertung der jeweilien Meßstelle zugeordnet sind, an welcher die Meßdaten erfaßt wurden.

Aus US 4.885.707 ist es bekannt, zu diesem Zweck ein Vibrationsmeßgerät zum Erfassen der Schwingstärke an Maschinenlagern mit einem Strichcodeleser auszustatten, welcher dazu dient, Strichcodierungen zu lesen, die an den jeweiligen Meßstellen zwecks Identifizierung derselben vorgesehen sind.

Aufgabe der vorliegenden Erfindung ist es, ein Meßgerät, welches Drehzahlen rotierender Körper erfassen kann, mit einer preiswerten und platzsparenden Einrichtung zur Erfassung von Meßstellenidentifikationsdaten anzugeben.

Erfindungsgemäß wird diese Aufgabe dadurch gelöst, daß das Meßgerät der eingangs genannten Art betreibbar ist, mittels der Lichtstrahl-Abtasteinrichtung kontrastkodierte Daten auf einer Oberfläche eines Datenträgers zu erfassen.

Das erfindunsgemäße Meßgerät umfaßt eine Lichtstrahl-Abtasteinrichtung, welche sowohl dazu verwendet werden kann, Drehzahlen mittels Reflektion eines ausgesendeten Lichtstrahls von einem rotierenden Körper zu erfassen, als auch dazu verwendet werden kann, kontrastkodierte Daten, beispielsweise einen Strichcode, zu erfassen, der die jeweilige Meßstelle identifiziert. Die Lichtstrahl-Abtasteinrichtung des Meßgerätes der vorliegenden Erfindung erfüllt somit zwei Aufgaben: einerseits dient sie zur Drehzahlerfassung mittels Reflektion, andererseits zur Erfassung von Meßstellen-Identifikationsdaten. Die elektronischen und optischen Komponenten der Lichtstrahl-Abtasteinrichtung sind für Drehzahlerfassung und Meßstellenidentifikation Datenerfassung nur einmal erforderlich und vorhanden, so daß das erfindungsgemäße Meßgerät preiswert und robust ist und darüber hinaus mit geringen Abmessungen realisiert werden kann.

Vorteilhafte Ausführungsbeispiele der vorliegenden Erfindung ergeben sich aus den Unteransprüchen.

Im folgenden werden Ausführungsbeispiele der vorliegenden Erfindung unter Bezugnahme auf die begleitenden Zeichnungen beschrieben.
- Fig. 1: zeigt ein Beispiel einer Meßstelle;
- Fig. 2: zeigt ein erstes Ausführungsbeispiel der vorliegenden Erfindung;
- Fig. 3: zeigt ein Ausführungsbeispiel einer Lichtstrahlabtasteinrichtung;
- Fig. 4: zeigt ein zweites Ausführungsbeispiel des erfindungsgemäßen Meßgerätes;
- Fig. 5: zeigt ein drittes Ausführungsbeispiel des erfindungsgemäßen Meßgerätes; und
- Fig. 6a, 6b: zeigen Beispiele eines Erfassungssignals.

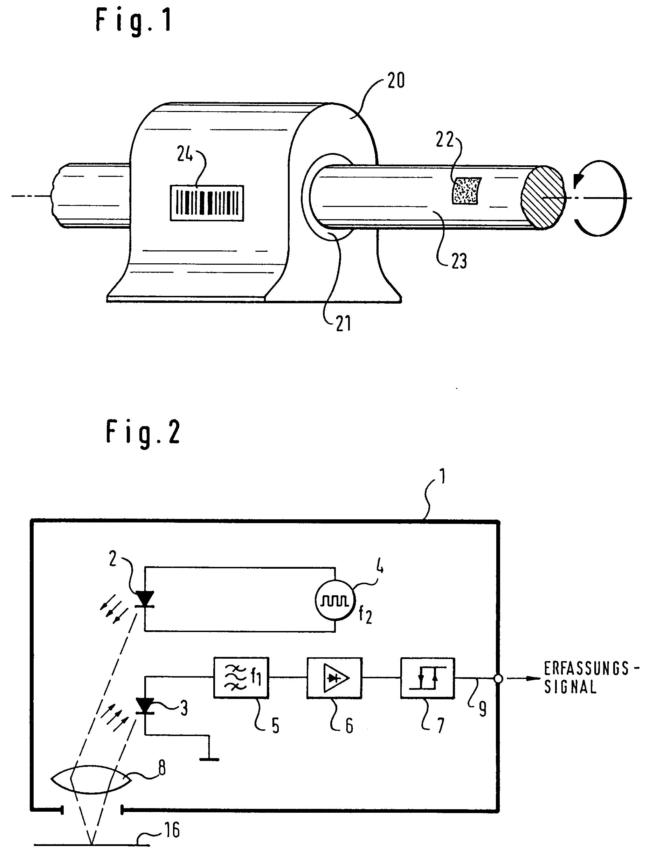

Fig. 1 zeigt ein Beispiel einer Meßstelle, an welcher eine Reihe von Maschinenzustandsdaten erfaßt werden soll. In diesem Beispiel sollen die Zustandsdaten eines Wälzlagers 21 in einem Lagerblock 20 erfaßt werden, welcher eine rotierende Welle 23 lagert. Die rotierende Welle 23 weist eine Reflexmarkierung 22 auf, welche zur Drehzahlmessung verwendet wird. Der Lagerblock 20 ist mit einer Meßstellenidentifikationseinrichtung 24 in Form einer Strichkodierung versehen.

Die Lichtstrahl-Abtasteinrichtung des erfindungsgemäßen Meßgerätes liest die Strichkodierung, erfaßt auf diese Weise die Meßstellenidentifikationsdaten, und setzt dieselbe Lichtstrahl-Abtasteinrichtung dazu ein, die Drehzahl der rotierenden Welle 23 nach dem Reflektionsprizip zu erfassen.Zwecks Erfassung der Meßstellenidentifikationsdaten wird das Meßgerät mit der Lichtstrahl-Abtasteinrichtung auf die Oberfläche der Strichcodierung 24 aufgesetzt und manuell quer zur Erstreckungsrichtung der Codierstriche bewegt.

Zur Drehzahlerfassung wird das Meßgerät im Abstand von der rotierenden Welle gehalten, so daß die Lichtstrahlabtasteinrichtung die rotierende Reflexmarke 22 beleuchtet, wenn diese sich auf der dem Meßgerät zugewandten Seite der Welle 23 befindet.

Nach Bedarf werden weitere Messungen, etwa Temperatur, Schwingungsstärke, etc. an der Meßstelle, hier der Lagerblock 20, vorgenommen.

Fig. 2 zeigt ein Ausführungsbeispiel einer Lichtstrahl-Abtasteinrichtung, wie sie in einem Meßgerät gemäß der vorliegenden Erfindung verwendet werden kann. Die Lichtstrahl-Abtasteinrichtung 1 umfaßt eine Laserdiode 2, welche von einer Impulsspannungsquelle 4 betrieben wird, so daß die Laserdiode 2 Lichtimpulse mit hoher Frequenz f₂ im Bereich von mehreren 10 bis mehreren 100 kHz aussendet. Das von der Laserdiode 2 ausgesendete Licht durchläuft optische Einrichtungen 8, etwa Linsen, welche das Licht auf eine Oberfläche 9, erfindungsgemäß entweder die Oberfläche einer rotierenden Welle oder eine Strichcodierung, richten. Das reflektierte Licht durchläuft optische Einrichtungen, welche dieselben sein können, die von dem ausgesendeten Licht durchlaufen werden, und trifft auf eine Photodiode 3, welche das empfangene Licht in elektrische Signale umwandelt. Die elektrischen Signale von der Photodiode 3 werden zwecks Ausschließung des störenden Einflusses von Fremdlicht bandpaßgefiltert, wobei die Durchlaßfrequenz des Bandpasses 5 gemäß der Impulsfrequenz der versorgungsschaltung 4 der Laserdiode 2 bestimmt wird. Das Ausgangssignal des Bandpasses 5 wird in einer Signalaufbereitungseinrichtung 6 verstärkt, gleichgerichtet und gefiltert, und an den Eingang eines Schwellwertschalters 7 gegeben. Am Ausgang 9 dieses Schwellwertschalters 7 steht ein Erfassungssignal zur Verfügung, welches der optisch auf der Oberfläche 9 erfaßten Kontrastabfolge entspricht.

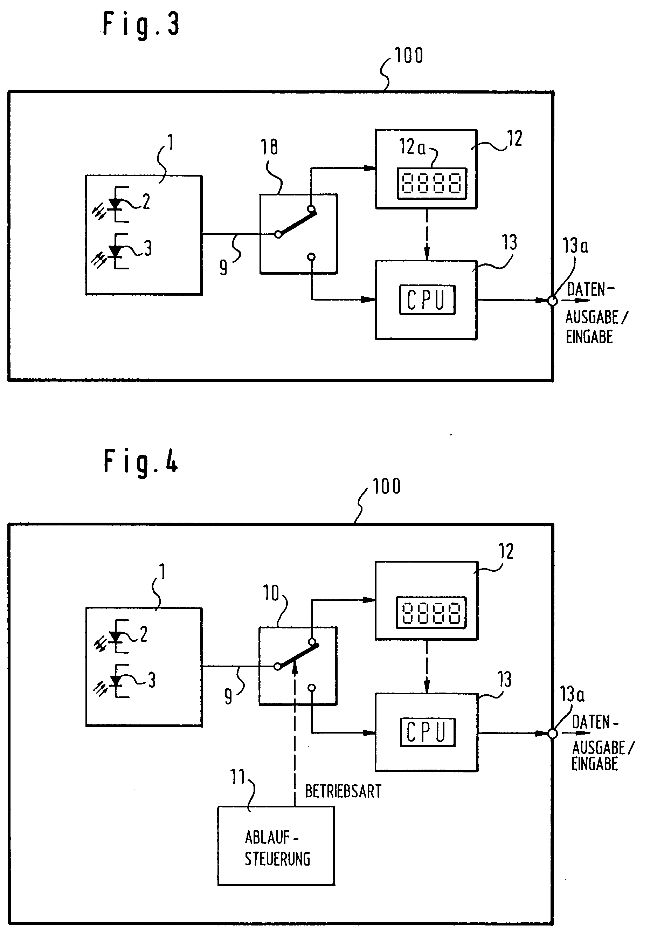

Fig. 3 zeigt ein erstes Ausführungsbeispiel des erfindungsgemäßen Meßgerätes. Das Meßgerät 100 umfaßt eine Lichtstrahl-Abtasteinrichtung 1, eine Drehzahl-Meßeinrichtung 12 mit einer Anzeigeeinrichtung 12a sowie eine Datenerfassungseinrichtung 13 mit einem Mikroprozessor CPU. 13a bezeichnet eine Schnittstelle, über welche erfaßte Daten zwecks Auswertung ausgelesen werden können.

Das Meßgerät 100 gemäß dem ersten Ausführungsbeispiel der Erfindung umfaßt ferner eine Wähleinrichtung 18 in Form eines Umschalters, der von einer Bedienungsperson betätigbar ausgestaltet ist. Die Wähleinrichtung 18 dient dazu, die Betriebsart des Meßgerätes 100 dahingehend zu bestimmen, ob die Lichtstrahl-Abtasteinrichtung 1 zur Drehzahlmessung betrieben wird (gezeichnete Stellung des Umschalters) oder ob die Lichtstrahl-Abtasteinrichtung 1 zur Erfassung von strichcodierten Daten betrieben wird.

In der Betriebsart Drehzahlmessung empfängt die Drehzahlmeßeinrichtung 12 von der Lichtstrahl-Abtasteinrichtung 1 das von dieser über die Leitung 9 ausgegebene Erfassungssignal, analysiert dieses und zeigt das Analyseergebnis in Form einer Drehzahl mittels der Anzeigeeinrichtung 12a an. Die Anzeigeeinrichtung 12a ist beispielsweise als Flüssigkristallanzeige ausgebildet. Die Drehzahlmeßeinrichtung 12 übermittelt ferner das Analyseergeb nis an die Datenerfassungseinrichtung 13, welche die erfaßte Drehzahl abspeichert.

Wird mittels der Wähleinrichtung 18 die Betriebsart Datenerfassung gewählt, so gelangt das Erfassungssignal am Ausgang 9 der Lichtstrahl-Abtasteinrichtung 1 über die Wähleinrichtung 18 an einen Erfassungssignaleingang der Datenerfassungseinrichtung 13. Die Datenerfassungseinrichtung analysiert das von der Lichtstrahl-Abtasteinrichtung 1 erhaltene Erfassungssignal und führt geeignete Decodiervorgänge durch, um die strichcodierten Daten, welche mittels der Abtasteinrichtung 1 gelesen wurden, wiederzugewinnen. Die Datenerfassungseinrichtung 13 ordnet die erfaßten Daten, welche die Meßstelle identifizieren, den gemessenen Zustandsdaten der Meßstelle zu und speichert diese Daten ab.

Die Datenerfassungseinrichtung 13 kann so ausgebildet sein, daß sie abhängig davon, wieweit der Meßvorgang fortgeschritten ist, dem Bediener den nächsten Schritt des Meßvorganges empfielt. Eine derartige Ablaufsteuerung wird von der Mikroprozessoreinrichtung CPU in der Datenerfassungseinrichtung 13 gemäß Programmdaten durchgeführt, welche die Datenerfassungseinrichtung über die Schnittstelleneinrichtung 13a empfängt. Erkennt die Datenerfassungseinrichtung 13, daß Meßdaten vorliegen, jedoch noch nicht die entsprechenden Meßstellenidentifikationsdaten, so gibt die Datenerfassungseinrichtung 13 ein optisches oder akustisches Signal aus, welche der Bedienungsperson signalisieren, daß die Meßstellenidentifikationsstellendatenerfassung noch durchzuführen ist.

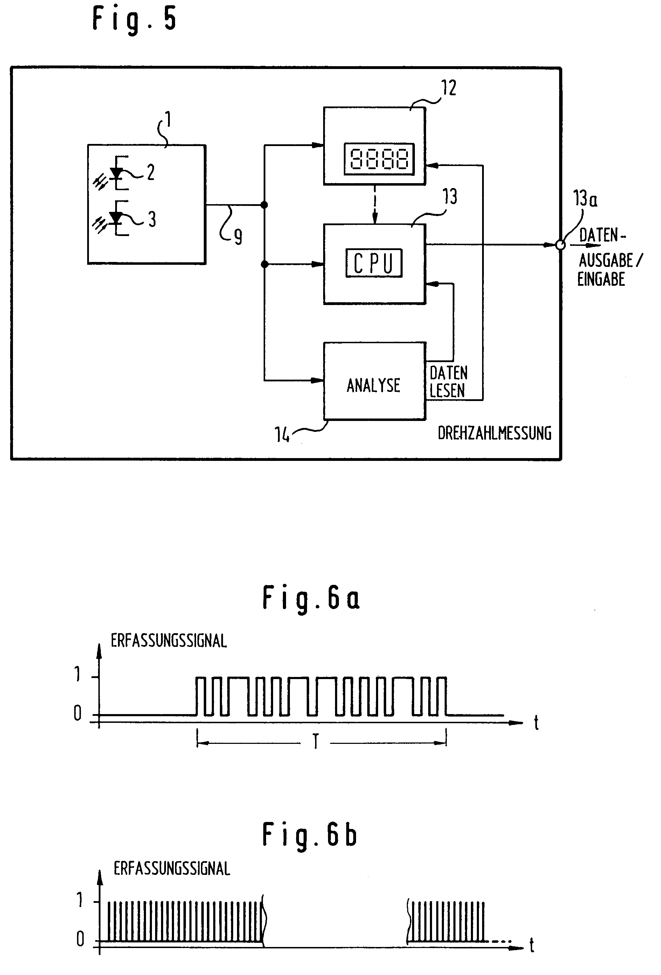

Fig. 4 zeigt ein zweites Ausführungsbeispiel des erfindungsgemäßen Meßgerätes 100. Das Meßgerät gemäß diesem Ausführungsbeispiel umfaßt neben der Lichtstrahl-Abtasteinrichtung 1, der Drehzahlmeßeinrichtung 12 und der Datenerfassungseinrichtung 13 eine Ablaufsteuerungseinrichtung 11, welche eine Betriebsartenumschalteinrichtung 10 steuert. In der Fig. 4 ist die Ablaufsteuerungseinrichtung 11 als funktionell eigenständige Einrichtung dargestellt. Ihre Funktion kann jedoch mittels des Mikroprozessors in der Datenerfassungseinrichtung 13 realisiert werden. Die Ablaufsteuerungseinrichtung 11 ist über die Schnittstelle 13a programmierbar, das Meßgerät gemäß diesem Ausführungsbeispiel entsprechend den an einer bestimmten Meßstelle vorzunehmenden Messungen sequentiell zu konfigurieren. Zu Beginn einer Meßdatenerfassung an einer bestimmten Meßstelle steuert die Ablaufsteuerung 11 das Meßgerät 11 mittels der Umschalteinrichtung 10 in die Betriebsart Datenerfassung und gibt an die Bedienungsperson ein optisches oder akustisches Signal aus, mittels der Lichtstrahl-Abtasteinrichtung 1 die Meßstellenidentifikationsdaten in die Datenerfassungseinrichtung 13 einzulesen. Die Datenerfassungseinrichtung 13 enthält für jede Meßstelle eine Liste von zu erfassenden Meßwerten. Gemäß dieser Liste konfiguriert nun die Ablaufsteuerung 11 das Meßgerät für jede einzelne Messung und signalisiert über eine Anzeigeeinrichtung der Bedienungsperson, welcher Meßwert als nächstes aufzunehmen ist. Nach erfolgter Erfassung des Meßwertes schreitet die Ablaufsteuerung 11 zur nächsten, zu erfassenden Meßgröße an dieser Meßstelle fort. Ist die zu erfassende Meßgröße eine Drehzahl, steuert die Alaufsteuerung 11 das Meßgerät 100 mittels der Umschalteinrichtung 10 in die Betriebsart Drehzahlmessung, in welcher dann das von der Lichtstrahl-Abtasteinrichtung 1 gelieferte Erfassungssignal in gleicher Weise ausgewertet wird wie im vorangehenden Ausführungsbeispiel. Nach Abschluß aller für die jeweilige Meßstelle erforderlichen Messungen gibt die Ablaufsteuerung 11 dann eine Anweisung optischer oder akustischer Art an die Bedienungsperson, die Meßstellenidentifikationsdaten der nächsten Meßstelle mittels der Lichstrahl-Abtasteinrichtung 1 einzulesen.

Fig. 5 zeigt ein drittes Ausführungsbeispiel eines Meßgerätes gemäß der vorliegenden Erfindung. Dieses Ausführungsbeispiel umfaßt neben der Lichtstrahl-Abtasteinrichtung 1, der Drehzahlmeßeinrichtung 12 und der Datenerfassungseinrichtung 13 eine Analyseeinrichtung 14, welche ebenso wie die Drehzahlmeßeinrichtung 12 und die Datenerfassungseinrichtung 13 als Eingangssignal das Erfassungssignal von der Ausgangsleitung 9 der Lichtstrahl-Abtasteinrichtung 1 empfängt. Die Analyseeinrichtung 14 analysiert das Erfassungssignal von der Abtasteinrichtung 1 und wählt abhängig vom Ergebnis der Analyse eine der Betiebsarten Drehzahlmessung und Datenerfassung. Abhängig von der gewählten Drehzahl sendet die Analyseeinrichtung 14 Aktivierungssignale an die Drehzahlmeßeinrichtung 12 oder an die Datenerfassungseinrichtung 13. Die Analyseeinrichtung 14 macht für die Wahl der Betriebsart Gebrauch davon, daß das Erfassungssignal von der Lichtstrahl-Abtasteinrichtung 1 in dem Fall, daß gerade eine Drehzahl gemessen wird, andere Eigenschaften aufweist als in dem Fall, daß mit der Lichtstrahl-Abtasteinrichtung Meßstellenidentifikationsdaten eingelesen werden.

Fig. 6A zeigt ein Beispiel eines Erfassungssignals, welches am Ausgang 9 der Lichtstrahl-Abtasteinrichtung 1 auftritt, wenn diese dazu verwendet wird, einen Strichcode zu lesen.

Fig. 6B zeigt im Vergleich dazu ein Beispiel eines Erfassungssignals Ausgang 9 der Lichtstrahl-Abtasteinrichtung 1, wenn diese zur Drehzahlmessung verwendet wird.

Gemäß einem ersten Ausführungsbeispiel der Analyseeinrichtung 14 nach dem dritten Ausführungsbeispiel eines erfindungsgemäßen Meßgerätes erfaßt die Analyseeinrichtung 14 die Zeitdauer T des Erfassungssignals. Erstreckt sich die Dauer des Erfassungssignals auf einen längeren Zeitraum als eine vorgegebene Zeitdauer T₀, so bestimmt die Analyseeinrichtung 14, daß die Lichtstrahl-Abtasteinrichtung 1 gegenwärtig eine Drehzahl mißt, und aktiviert demgemäß die Drehzahlmeßeinrichtung 12 und inaktiviert die Datenerfassungseinrichtung 13.

Erfaßt die Analyseeinrichtung 14 dagegen, daß das Erfassungssignal eine Zeitdauer T aufweist, welche kleiner ist als die vorgegebene Zeitdauer, entscheidet die Analyseeinrichtung 14, daß die Lichtstrahl-Abtasteinrichtung 1 gegenwärtig zur Datenerfassung verwendet wird, inaktiviert die Drehzahlmeßeinrichtung 12 und aktiviert die Datenerfassungseinrichtung 13.

Gemäß einem zweiten Ausführungsbeispiel der Analyseeinrichtung 14 nach dem dritten Ausführungseispiel eines erfindungsgemäßen Meßgerätes analysiert die Analyseeinrichtung 14 das Erfassungssignal am Ausgang 9 der Lichtstahl-Abtasteinrichtung 1 daraufhin, ob dieses eine im wesentlichen periodische Struktur aufweist. Eine solche Analyse kann beispielsweise auf digitalem Wege mittels einer FFT (Fast Fourier Transformation) über einen vorgegebenen Zeitraum des Erfassungssignals gemessen vom Beginn des Erfassungssignals, durchgeführt werden. Weist das Erfassungssignal eine überwiegend periodische Struktur auf, so entscheidet die Analyseeinrichtung 14, daß die Lichtstrahl-Abtasteinrichtung 1 gegenwärtig eine Drehzahl erfaßt und führt das Erfassungssignal der Drehzahlmeßeinrichtung 12 zu bzw. aktiviert diese und inaktiviert die Datenerfassungseinrichtung 13. Ergibt die Analyse andererseits, daß das Erfassungssignal 9 in dem zur Analyse verwendeten Zeitintervall nicht im wesentlichen periodisch ist, gibt die Analyseeinrichtung 14 das Erfassungssignal, wie es im Analysezeitraum erfaßt wurde, weiter an die Datenerfassungseinrichtung 13, aktiviert diese und inaktiviert die Drehzahlmeßeinrichtung 12. Die Datenerfassungseinrichtung 13 dekodiert dann das Erfassungssignal, speichert die erfaßten Daten ab oder erzeugt gegebenenfalls eine Fehlermeldung, welche anzeigt, daß das Erfassungssignal einer Strichcodierung nicht entspricht.

Gemäß einem dritten Ausführungsbeispiel der Analyseeinrichtung 14 stützt diese die Entscheidung, ob die Lichttrahl-Abtasteinrichtung 1 gegenwärtig zur Drehzahlmessung oder zur Datenerfassung verwendet wird, darauf, ob das Erfassungssignal hochfrequente Anteile aufweist oder nicht. Dieses Ausführungsbeispiel ist insbesondere in dem Fall geeignet, daß hohe Drehzahlen gemessen werden sollen. Wird von der Analyseeinrichtung 14 gemäß diesem Ausführungsbeispiel festgestellt, daß die Grundfrequenz des Erfassungssignals oberhalb einer vorgegebenen Schwelle liegt, so erkennt diese, daß mit der Lichtstrahl-Abtasteinrichtung 1 gegenwärtig eine Drehzahl gemessen wird, und aktiviert demgemäß die Drehzahlmeßeinrichtung 12 und inaktiviert die Datenerfassungseinrichtung 13. In entsprechender Weise wählt die Analyseeinrichtung 14 die Betriebsart Datenerfassung, wenn die Grundfrequenz des Erfassungssignals unterhalb der vorgegebenen Schwelle liegt.

Gemäß einem vierten Ausführungsbeispiel der Analyseeinrichtung 14 stützt diese die Entscheidung, ob mittels der Lichtstrahl-Abtasteinrichtung 1 gegenwärtig eine Drehzahl gemessen wird oder Daten erfaßt werden, auf eine Kombination der in den vorangehenden Ausführungsbeispielen zur Analyseeinrichtung 14 beschriebenen Kriterien. Beispielsweise entscheidet die Analyseeinrichtung 14 aus der Analyse des Erfassungssignals, daß die Lichtstrahl-Abtasteinrichtung 1 gegenwärtig Daten erfaßt, wenn die Dauer des Erfassungssignals kürzer als eine vorbestimmte Zeitdauer ist und das Erfassungssignal überwiegend nicht periodische Strukturen aufweist. Durch geeignete Kombination verschiedener Kriterien kann die Fehlerrate des Analyseergebnisses abhängig von den Anforderungen der Praxis verringert werden. Ferner ist es durch Kombination verschiedener Kriterien möglich, daß die Analyseeinrichtung 14 erkennt, daß es sich beim von der Lichtstrahl-Abtasteinrichtung 1 ausgegebenen Erfassungssignal weder um ein Drehzahlmeßsignal noch um ein Datenerfassungssignal handelt, wenn das Erfassungssignal am Ausgang 9 der Abtasteinrichtung 1 nicht alle erforderlichen Kriterien eines Drhezahlmeßsignales bzw. eines Datenerfassungssignales erfüllt.

## Patentansprüche

1. Meßgerät mit einer integrierten Licht-Abtasteinrichtung (1) zum Erfassen der Drehzahl eines rotierenden Körpers,
dadurch **gekennzeichnet**, daß
das Meßgerät (100) betreibbar ist, mittels der Lichtstrahl-Abtasteinrichtung (1) kontrastkodierte Daten auf einer Oberfläche eines Datenträgers (24) zu erfassen.

2. Meßgerät nach Anspruch 1,
**gekennzeichnet** durch
- eine erste Signalverarbeitungseinrichtung (12) zum Umwandeln von von der Lichtstahl-Abtasteinrichtung (1) ausgegebenen Erfassungssignalen in einen Drehzahlwert; und
- eine zweite Signalverarbeitungseinrichtung (13) zum Umwandeln von von der Lichtstrahl-Abtasteinrichtung (1) ausgegebenen Erfassungssignalen in Ausgabedaten gemäß einer Dekodiervorschrift.

3. Meßgerät nach Anspruch 1 oder 2,
**gekennzeichnet** durch
eine Wähleinrichtung (18), welche von einer Bedienungsperson betätigbar ausgestaltet ist, um eine der Betriebsarten Drehzahlmessung und Datenerfassung auszuwählen.

4. Meßgerät nach Anspruch 1 oder 2,
**gekennzeichnet** durch
eine Analyseeinrichtung (14), welche ausgebildet ist, von der Lichtstrahl-Abtasteinrichtung (1) ausgegebene Signale zu analysieren und abhängig vom Ergebnis der Analyse selbsttätig eine der Betriebsarten Drehzahlmessung und Datenerfassung zu wählen.

5. Meßgerät nach Anspruch 4,
dadurch **gekennzeichnet**, daß
die Analyseeinrichtung (14) ausgebildet ist, die Betriebsart Datenerfassung zu wählen, wenn das von der Lichtstrahl-Abtasteinrichtung (1) ausgegebene Erfassungssignal (9) kürzer als eine vorgegebene Zeitdauer (T₀) andauert, und die Betriebsart Drehzahlmessung zu wählen, wenn das von der Lichtstrahl-Abtasteinrichtung (1) ausgegebene Erfassungssignal länger als die vorgegebene Zeitdauer (T₀) andauert.

6. Meßgerät nach Anspruch 4,
dadurch **gekennzeichnet**, daß
die Analyseeinrichtung (14) ausgebildet ist, die Betriebsart Drehzahlmessung zu wählen, wenn das von der Lichtstrahl-Abtasteinrichtung (1) ausgegebene Erfassungssignal eine überwiegend periodische Struktur aufweist, und die Betriebsart Datenerfassung zu wählen, wenn das Erfassungssignal eine überwiegend aperiodische Struktur aufweist.

7. Meßgerät nach Anspruch 4,
dadurch **gekennzeichnet**, daß
die Analyseeinrichtung (14) ausgebildet ist, die Betriebsart Drehzahlmessung zu wählen, wenn die Frequenz des von der Lichtstrahl-Abtasteinrichtung (1) ausgegebenen Erfassungssignals hoch ist, und die Betriebsart Datenerfassung zu wählen, wenn die Frequenz des Erfassungssignals niedrig ist.

8. Meßgerät nach Anspruch 6,
dadurch **gekennzeichnet**, daß
die Analyseeinrichtung (14) die jeweilige Betriebsart abhängig von der Dauer und von der Periodizität des Erfassungssignals und/oder der Frequenz des Erfassungssignals zu wählen ausgebildet ist.

9. Meßgerät nach einem der vorangehenden Ansprüche,
dadurch **gekennzeichnet**, daß
die Lichtstrahl-Abtasteinrichtung (1) eine Laserstrahl-Erzeugungseinrichtung (2) einschließt.

10. Meßgerät nach einem der Vorangehenden Ansprüche,
dadurch **gekennzeichnet**, daß
die Lichtstrahl-Abtasteinrichtung (1) betreibbar ist, einen Strichkode (24) zu lesen, welcher eine Meßstelle identifiziert.
